**Europäisches Patentamt**

(19) **European Patent Office**

**Office européen des brevets**

(11) Publication number : **0 494 325 B1**

# (12) EUROPEAN PATENT SPECIFICATION

(45) Date of publication of patent specification :
**08.11.95 Bulletin 95/45**

(51) Int. Cl.⁶ : **G06F 3/033,** G06T 11/80, H04N 5/262

(21) Application number : **91100169.1**

(22) Date of filing : **07.01.91**

(54) **Apparatus for editing and creating video image and method for editing and creating video image.**

(43) Date of publication of application :
**15.07.92 Bulletin 92/29**

(45) Publication of the grant of the patent :
**08.11.95 Bulletin 95/45**

(84) Designated Contracting States :
**DE FR GB**

(56) References cited :
**EP-A- 0 367 405**
**EP-A- 0 403 054**
**GB-A- 2 089 625**
**US-A- 4 796 020**

(73) Proprietor : **SHIMA SEIKI MFG., Ltd.**
**No. 85, Sakata**
**Wakayama-shi, Wakayama 641 (JP)**

(72) Inventor : **Kotaki,Kenji**
**22-43 Numa-cho**
**Kishiwada-shi**
**Osaka (JP)**
Inventor : **Nagashima,Hiroshi**
**1-3 Takasho-machi 3-chome**
**Wakayama-shi**
**Wakayama-ken (JP)**

(74) Representative : **Patentanwälte Beetz - Timpe - Siegfried Schmitt-Fumian - Mayr**
**Steinsdorfstrasse 10**
**D-80538 München (DE)**

# Description

## BACKGROUND OF THE INVENTION

### 1. Field of the Invention

The present invention relates to improvements of an apparatus for editing and creating video image and a method for editing and creating video image, and more particularly to an apparatus for editing and creating video image and a method for editing and creating video image capable of painting at high quality and at high speed by real-time performance of adjustment of the nib diameter depending on the pressure of the stylus pen and the soft edge processing corresponding to the nib diameter.

### 2. Description of the Prior Art

A general conventional apparatus for editing and creating video image comprises an input device composed of stylus pen, tablet, keyboard and others, an operation processor for processing various data signals from the input device, and display device and others, in which an image drawn by an operator on the tablet by using the stylus pen is displayed in real time on the display.

In this kind of apparatus for editing and creating video image, however, the operator has usually to select a pen of proper diameter out of specified stylus pens, and draw by using it. In reality, the number of stylus pens to be used is few, and a delicate pen touch is hard to obtain, and fine correction works can hardly done accurately and smoothly.

On the other hand, in the outer periphery of the painting drawn by an actual brush, a spontaneous soft boundary (hereinafter called soft edge) is usually formed by a delicate mixing of the brush color and the paper color. In the apparatus for editing and creating video image using a stylus pen, it is indispensable to treat the video signal by the so-called soft edge processing in order to realize such soft edge of the brush.

As the soft edge processing method in this kind of apparatus for editing and creating video image, the technology for varying the touch of the soft edge processing itself by the stylus pen pressure and feeding it back has been developed (e.g. the Japanese Laid-open Patent No. 62-35980).

The soft edge processing method disclosed in the Japanese Laid-open Patent No. 62-35980, etc. can simulate the existing painting tools (brush, pen, etc.) perfectly to a certain extent, and realize various pen touches of the painting tools nearly satisfactorily, thereby bringing about excellent effects.

Generally, in works for painting a drawing or correcting a drawing, however, in order to realize the delicate pen touches of the painting tools such as brushes perfectly, it is more important to vary the diameter of the nib depending on the pressure of the stylus pen, than to vary the degree of soft edge processing itself by the pressure of the stylus pen and to feed it back.

In other words, in the actual world of painting, even when the same brush and same color are used, the touch of the brush varies significantly depending on what to paint on (for example, between painting on paper and painting on cloth, the touch of the brush differs about twice). Therefore, in order to simulate the brush perfectly, it is necessary to process in harmony with the change of the nib diameter depending on the nib pressure and material feeling of the material to be painted on, aside from the change of the degree of soft edge processing, and in the conventional soft edge processing method of varying only the degree of the soft edge processing according to the stylus pressure and feeding it back, the painting tools could not be simulated completely, or the delicate touches of the painting tools could not be reliably reproduced.

Besides, in the conventional soft edge processing method, it is extremely difficult to process the soft edge following the fast moving speed of the stylus pen, and hence it was necessary to restrict the pen moving speed within a certain speed or use an expensive electronic device.

EP-A-0 403 054 disclose a video editing system using a digitizer, in which sampled values of the nib pressure are interpolated over the length of the line to avoid discontinuities.

US-A-4 796 020 discloses a video editing system using a digitizer, in which anti-aliased lines are drawn according to gaussian profiles stored in a look-up table and selected in accordance with the estimated slope of the line.

## SUMMARY OF THE INVENTION

Of the above problems of the conventional apparatus for editing and creating video image, the invention is intended to solve the problems of (1) difficulty of obtaining desired pen touch and making fine corrections smoothly because the number of selectable and usable stylus pens is limited, (2) difficulty of realizing perfect simulation of painting tools and perfect touch of brush, and (3) difficulty of increasing soft edge processing and realizing soft edge following up the moving speed of the stylus pen, and is hence to present an apparatus for editing and creating video image and a method for editing and creating video image capable of forming painting of high quality in real time on a display without using extensively expensive devices.

The present inventor closely observed the painting works and paint correction works of artists, and found out that the artists paint and correct fine parts and bold parts skillfully by using various directions and intensities (pressures) of the brushes in painting and correction depending on actual painting materials (paper and brush). In particular it is very often that painting and correction are done while varying the intensity of brush (brush pressure), and therefore in editing and creating electronic images, it is found out that the diameter of the brush (the thickness of the line of painted image) should be determined in the first place depending on the stylus pressure, rather than directly determining the degree of soft edge processing (density) of the painting from the stylus pressure. That is, whether the natural painted image can be realized in an electronic apparatus or not is found to depend on how to vary the diameter of the stylus depending on the stylus pressure, following the moving speed of the stylus pen, while maintaining the soft edge of the stylus nib.

The invention is developed in the basis of the above results of observation and analysis, and is fundamentally designed to feed back the pen nib pressure from the stylus pen to the operation processor, varying the nib diameter smoothly, following up the speed of the stylus pen operated by the operator, and process the painting data signal by painting size variable type anti-aliasing.

More practically, the apparatus of the invention is disclosed in claims 1 and 5, and the method of the invention is disclosed in claim 4. Further aspects of the invention are disclosed in the dependent claims.

In the invention, since the nib diameter is changed depending on the pen nib pressure and the anti-aliasing processing is done properly on the basis thereof, as compared with the case of direct soft edge processing from the pen nib pressure as in the prior art, a more delicate brush touch may be realized, and a painting picture of higher quality may be obtained.

Thus, according to the invention, without using expensive devices, painting images of extremely high quality may be realized in real time, and superb practical effects are brought about.

BRIEF DESCRIPTION OF THE DRAWINGS

Other and further objects, features, and advantages of the invention will be more explicit from the following detailed description taken with reference to the drawings wherein:

Fig. 1 is a block diagram showing the basic composition of an apparatus for editing and creating video image according to the invention;

Fig. 2 is a schematic explanatory diagram of interpolation processing in a painting front-end processor;

Fig. 3 is an explanatory diagram of the content of arithmetic processing of Z-operation processor;

Fig. 4 is an explanatory diagram showing coordinate points in real number operation;

Fig. 5 (a) shows an example of Z-value reference table in the Z-operation processor, Fig. 5 (b) and Fig. 5 (c) are explanatory diagrams of data distribution in anti-aliasing processing, and anti-aliasing processing range;

Fig. 6 is a diagram showing the distribution of Z-values in continuous painting processing;

Fig. 7 is a block diagram showing an internal composition of Z-operation processor;

Fig. 8 is a flow chart for explaining the operation of main processor 2;

Fig. 9 is a graph showing the state of change of contribution rate Z depending on nib pressure;

Fig. 10 is a diagram showing the state of interpolation;

Fig. 11 is a flow chart for explaining the painting operation according to the invention;

Fig. 12 is a graph showing a store content of the Table Tz;

Fig. 13 is a graph showing a distribution of Zt and Za; and

Fig. 14 (1) through 14 (6) are diagrams showing a relation between the radius b and the Z-value table.

DETAILED DESCRIPTION OF THE PREFERRED EMBODIMENTS

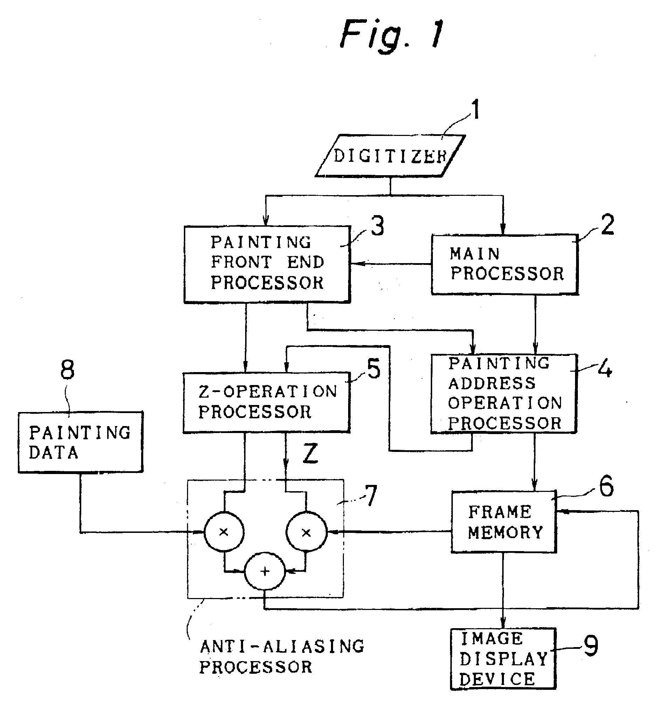

Now referring to Figs. 1 to 6, preferred embodiments of the invention are described below.

Fig. 1 is a block diagram showing the composition of an apparatus for editing and creating video image according to the invention, and this apparatus for editing and creating video image comprises an input device (digitizer) 1 composed of stylus pen, keyboard, touch tablet and others, a main processor 2, a painting front-end processor 3, a painting address operation processor 4, a Z-operation processor 5, a frame memory 6, an anti-aliasing processor 7, a painting at memory 8, an image display device 9 and others.

The pen coordinate values based on the digitizer coordinate system and pen nib pressure of the stylus pen operated by the operator are continuously delivered at specific intervals from the digitizer 1, and the output data are individually fed into the main processor 2 and the painting front-end processor 3. The pen nib pressure means manual pressure applied to the stylus pen by the operator.

The main processor 2 processes the pen coordinate values from the digitizer 1, and judges the commands from the content of the menu, and sets the data corresponding to the command to the processors 3, 4. When executing the command relating to pen painting, in order to realize the rapidity, the pen coordinate values are processed in the painting front-end processor 3. In the main processor 2, cursor display, keyboard sensing, and other processing are done.

The painting front-end processor 3 is responsible for processing the pen coordinate values X, Y and pen nib pressure W in command execution relating to pen painting as mentioned above. That is, having the coordinates X, Y as the center, the circle painting unit possessing the radius b corresponding to the nib pressure W is determined.

In case the movement of the stylus pen of the operator is fast, it is difficult to sufficiently trace the pen trajectory by the coordinate outputs of the digitizer 1 due to the relation with the processing speed of the digitizer 1, and the output coordinate data are not continuous but are discrete.

To avoid such inconvenience, in this processor 3, the so-called interpolation processing of input data is effected.

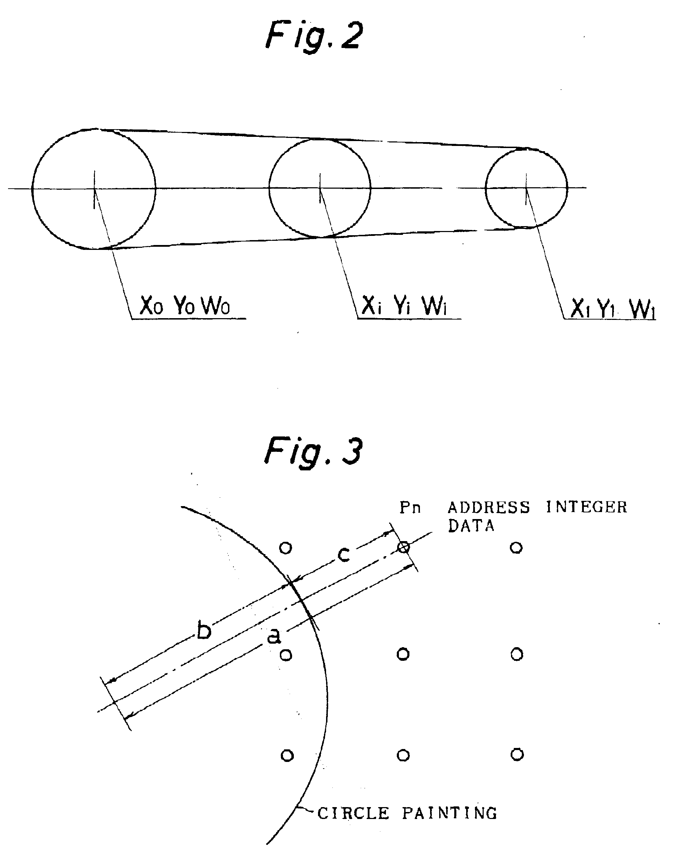

Fig. 2 shows an example of this interpolation processing, in which the interpolation values (Xi, Y, Wi) are calculated from the pen coordinate data (Xo, Yo), (X1, Y1), and pen nib pressure data (Wo), (W1) entered from the digitizer 1. As a result of interpolation processing, continuous generation of coordinate data from the digitizer 1 is enabled, and the smooth stylus pen movement is simulated. Such simulation may be preferably executed by interpolating at 1/5 pitch of the radius of the circle painting unit.

The calculated interpolation values (Xi, Y, Wi) possess the content expressing the center coordinates of the circle painting unit and the radius of the circle, and are transferred at each circle painting unit to the painting address operation processor 4 and Z-operation processor 5.

The painting address processor 4 supplies the so-called DMA address to the frame memory 6 corresponding to the coordinate data of the digitizer 1. This DMA address is generated in correspondence to the coordinate in the squareregion including the circle painting unit inside, centered on the center coordinates of the circle.

The processor 4 calculates an address integer data Pn corresponding to a pixel address on the image display device 9 , and feeds it into the Z-operation processor 5. The address integer data Pn is generated according to a scanning of the square region.

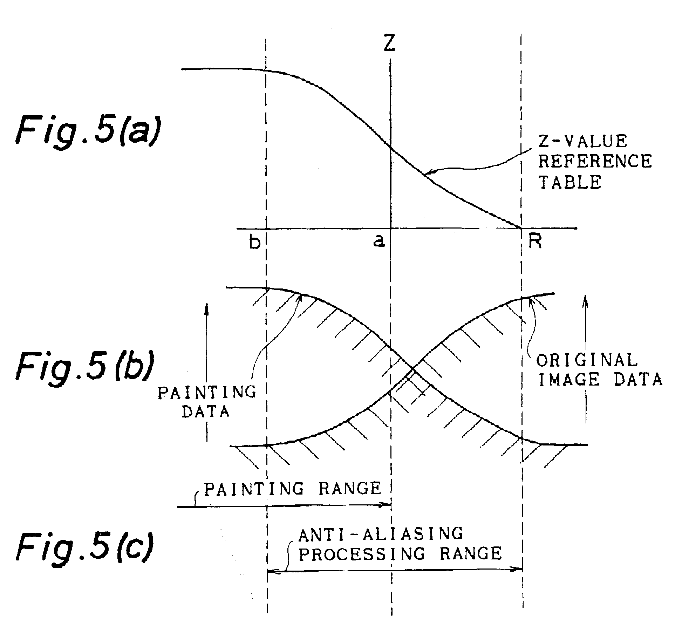

The Z-operation processor 5 calculates, as shown in Fig. 3, the center coordinate values of the circle painting unit relatively corresponding to the digitizer coordinates, from the address integer data Pn value entered from the painting address operation processor 4, and calculates the distance a from the point of the Pn value to the circle center specified in the digitizer coordinates, and also calculates the difference c = a - b between the distance a and the painting radius b. In addition, the Z-operation processor 5 determines the Z-value corresponding to the painting radius, by referring to the table as shown in Fig. 5 (a), from the calculated c value (that is, the value corresponding to the nib diameter proportional to the pen nib pressure), and delivers the calculated value Z to the anti-aliasing processor 7.

The operation unit of the Z-operation processor 5 has a so-called pipe-line structure, and performs real time operation, which is practically free of problem.

As for the reference table, three to five types are prepared, in the practically necessary width for c value (for example, $0 \leq c \leq 200$), corresponding to the types of stylus, such as brush, pencil, and airbrush), and the type of the reference table to be applied is selected freely by the operator at the command level operation, so that the degree of soft edge processing may be varied.

In the invention, as mentioned above, corresponding to the nib pressure W, the Z-operation processor 5 calculates determines the c value as shown in Fig. 3, and the Z-value corresponding to the c value is obtained by referring to the table, and therefore it is enough to prepare only a set of table of Z-values corresponding to c values of practically necessary width in every type of stylus (for example, $0 \leq c \leq 200$ approximately), and by providing a set of reference tables, the soft edge processing operation of the brush and diameter of pen tracing the moving speed of the stylus pen, which was conventionally impossible, can be realized without using expensive parts.

To the contrary, if it is attempted to realize the same function as the Z-operation processor 5 of the invention only by table reference, after preliminarily writing the Z-value as the image data in the memory by preparing all data in tables of the radius b and the center coordinates at each circle painting unit, the pattern image data of Z-values become enormous as mentioned below, which is practically impossible to realize.

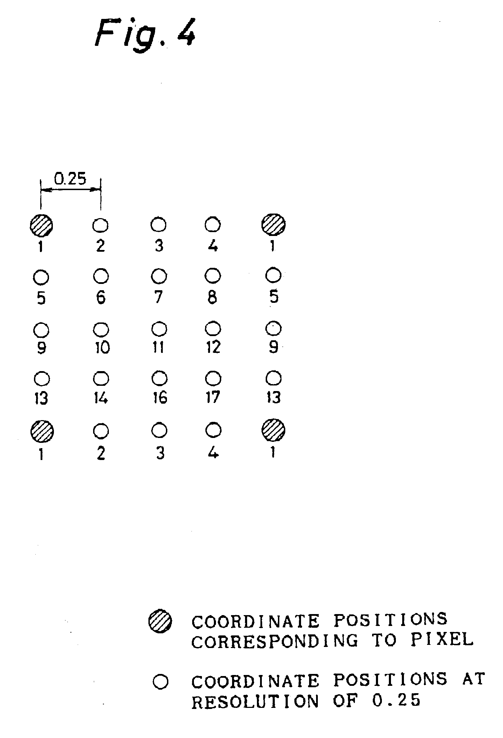

That is, supposing to prepare all range of the radius from 1 to 512 as patterns and to set the resolution of 0.25 according to the precision required practically, it requires Z-value patterns corresponding to 512/0.25 = 2047 types of radii exclusive of zero radius. Concerning the center coordinates, the resolution of 0.25 is also required for X and Y respectively, and the pattern image data of Z-values must be prepared independently for the designation below the decimal point. Therefore, supposing the resolution in the X, Y coordinates to be 0.25, the number of center coordinates that can be taken is 16 positions as shown in Fig. 4, and in each one of these center coordinates, pattern image data in 2047 different radii are required.

As a result, the total number of pattern image data that are required is 2047 x 16 = 32752 patterns, and when five types of distribution pattern of Z-value are prepared, the Z-value pattern image data is need in a sum of 32762 x 5 = 163760 types.

As mentioned herein, in the case of table reference to all in each circle painting unit, the required Z-value pattern image data are too colossal, which is completely impossible to realize.

The frame memory 6 is a RAM of multiport access structure, and it delivers the image display data to the image display device 9, and simultaneously performs read-modify-write operation.

The anti-aliasing processor 7 is composed of two sets of multiplier and adder, and the original image data A from the frame memory 6 is multiplied by the Za-value from the Z-operation processor 5, and the painting data B corresponding to the color of the image from the painting data memory 8 is multiplied by the Za-value, and the image display data D after proper soft edge processing by the Z value corresponding to the nib diameter is fed into the frame memory 6. The $\overline{Za}$-value is the 1's complement of the Za-value, i.e. equals to 1-Za as described below.

That is, the pixel data A corresponding to the address from the painting address operation processor 4 is read out from the frame memory 6, and at the same time the Z-value, such as Za and $\overline{Za}$, corresponding to the address is calculated in the Z-operation processor 5, and the calculated value is fed into the anti-aliasing processor 7. The result of processing in the processor 7 is delivered into the frame memory 6 as the pixel data D, and is written in the same address as the pixel data A.

Fig. 5 (a) shows a distribution from a Z-value reference table corresponding to distance a. In case a<b, Z equals a constant value. In case a>R, Z equals zero.

Fig. 5 (b) shows the state of soft edge processing in the anti-aliasing processor 7, and the original image data A and the painting data B are subjected to soft edge processing to be transformed into the data corresponding to the Z-value reference table T, and as shown in Fig. 5 (c), the anti-aliasing processing is down in a range corresponding to the c value of the Z-value reference table T, with respect to the boundary of the painting range E.

This operation is effected on the entire area specified by the painting points (that is, the whole area in the circle painting unit), and the result is overlaid at each painting point interpolated by the painting front-end processor 3, and delivered from the frame memory 6 into the image display device 9.

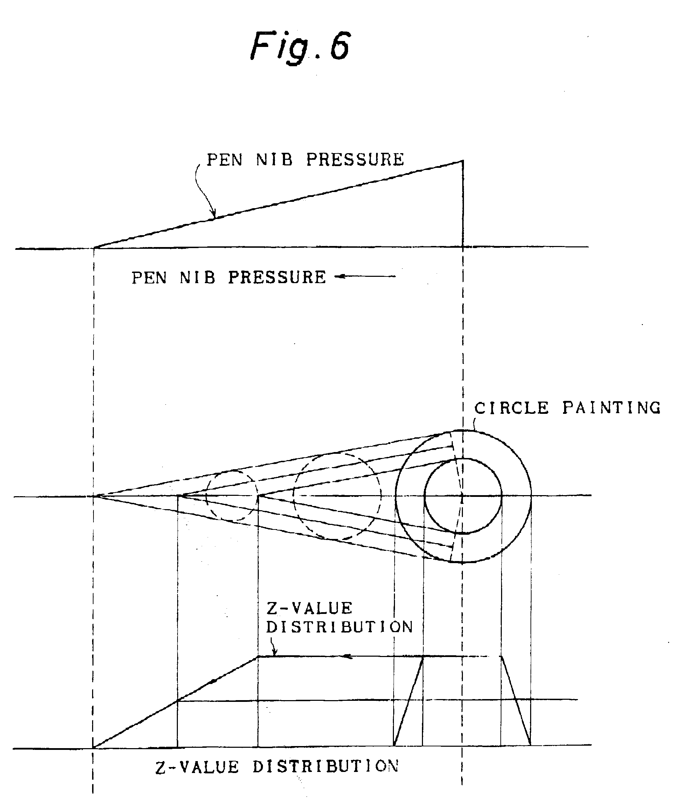

Fig. 6 shows the state of three-dimensional distribution of Z-values in continuous painting process, in which the painting data B and original image data A are subjected to soft edge processing along the smooth Z-value distribution, and the smooth painting expressions from thin lines into thick lines characteristic of the painting by brush are electronically realized.

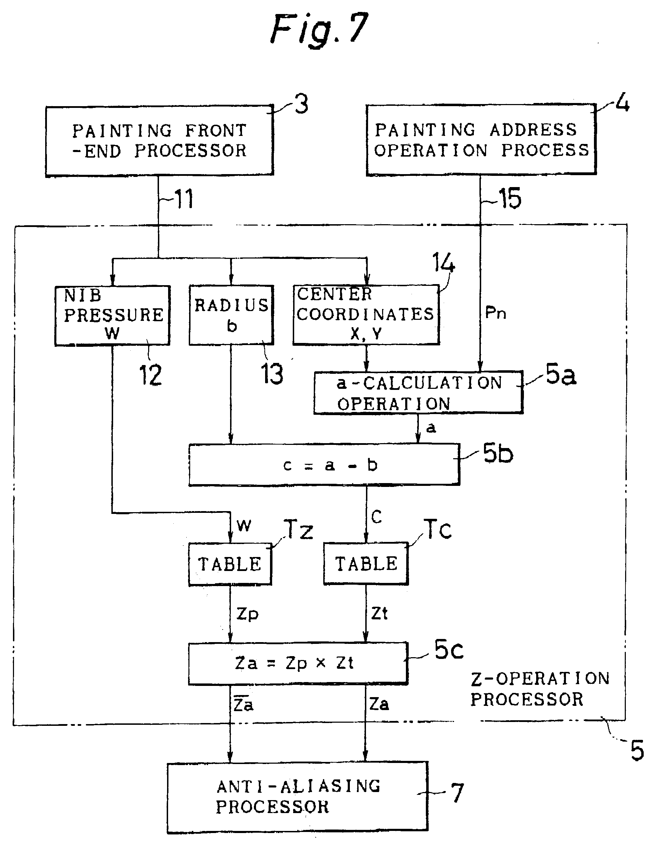

Fig. 7 is a block diagram showing a structural example of the Z-operation processor 5 which is the Z-value calculating means. The signals expressing the nib pressure W, radius b, and center coordinates X, Y given from the painting front-end processor 3 through line 11 are latched respectively in nib pressure register 12, radius register 13 and center coordinates register 14. The signal representing the address integer data Pn from the painting address operation processor 4 is given to an a-calculation operation circuit 5a. In the a-calculation operation circuit 5a, the center coordinate values X, Y from the center coordinates register 14 are also given. The a-calculation operation circuit 5a determine the distance a from the center coordinates X, Y to the coordinates corresponding to the address Pn by calculation.

The outputs from the a-calculation operation circuit 5a and the radius register 13 are given to a subtraction circuit 5b, and the difference of c = a - b is calculated. By this difference c, the table Tc is referred to, and the contribution degree value Zt corresponding to the value of c is obtained for every type of brush. The output from the nib pressure register 12 is given to the table Tz, and the contribution degree value Zp corresponding to the nib pressure W is obtained by referring to the table.

The outputs from the tables Tc, Tz are given to a multiplication circuit 5c. The multiplication circuit 5c gives the value Za obtained by the calculation of Za = Zp x Zt. Meanwhile, the values of Zp and Zt are in a range of

$$0 \leqq Z_P \leqq 1$$
$$0 \leqq Zt \leqq 1$$

and Za is also in a range of

$$0 \leqq Za \leqq 1.$$

The multiplication circuit 5c leads out the signals expressing this value of Za and the value of the complement $\overline{Za}$ of Za to 1 as expressed in

$$\overline{Za} = 1 - Za,$$

and gives them to the anti-aliasing processor 7.

In the anti-aliasing processor 7, the intensity of each pixel is calculated as

$$D = Za \times B + \overline{Za} \times A$$

where A is the original brightness, B is the painting data, and D is a new brightness.

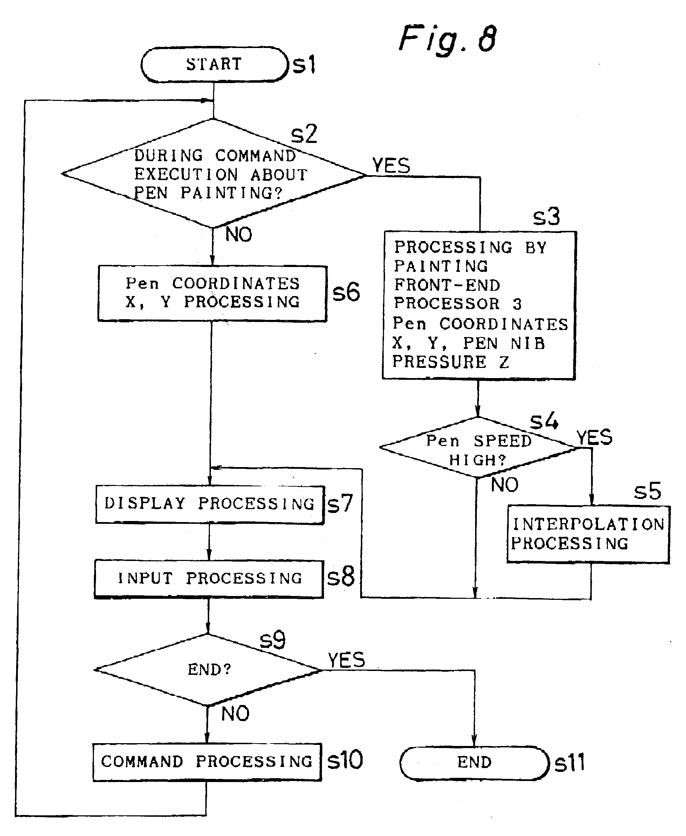

Fig. 8 is a flow chart showing the operation of the main processor 2. Starting from step s1, when it is judged as command execution for pen painting at step s2, the operation advances to step s3, and processing by the painting front-end processor 3 is done. When the pen speed is fast, the interpolation is processed at steps s4 and s5. At step s6, the pen coordinates input processing such as menu input is effected. At steps s7 and s8, display and input processing of cursor and keyboard are conducted. The given command is processed at steps s9 and s10, and when the end is designated, the operation is terminated at step s11.

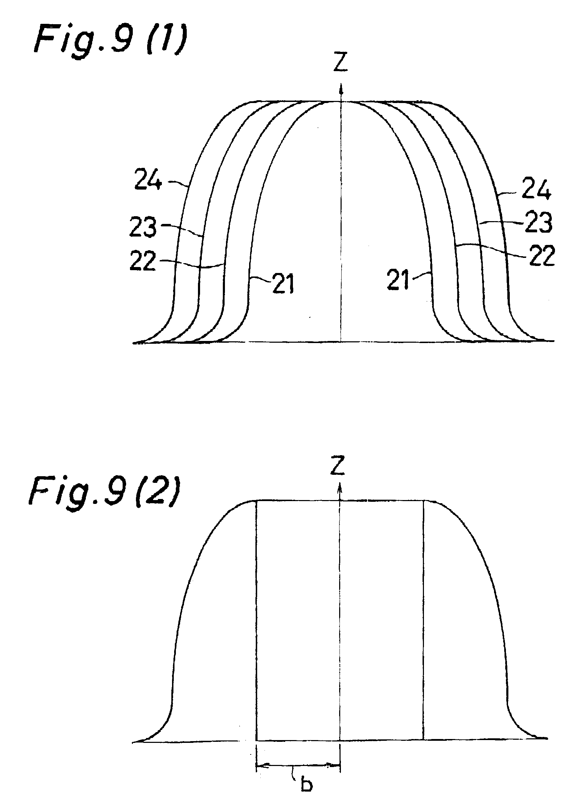

Fig. 9 (1) is a graph showing the changes of the contribution degree value Z. When the nib pressure W is small, it is expressed by line 21, and as the nib pressure W increases, it changes as shown in line 22, line 23 and line 24. What is of note here is that, as shown in Fig. 9 (2), the peak value of the contribution degree value Z is constant although the radius b of painting changes corresponding to the changes of the nib pressure W.

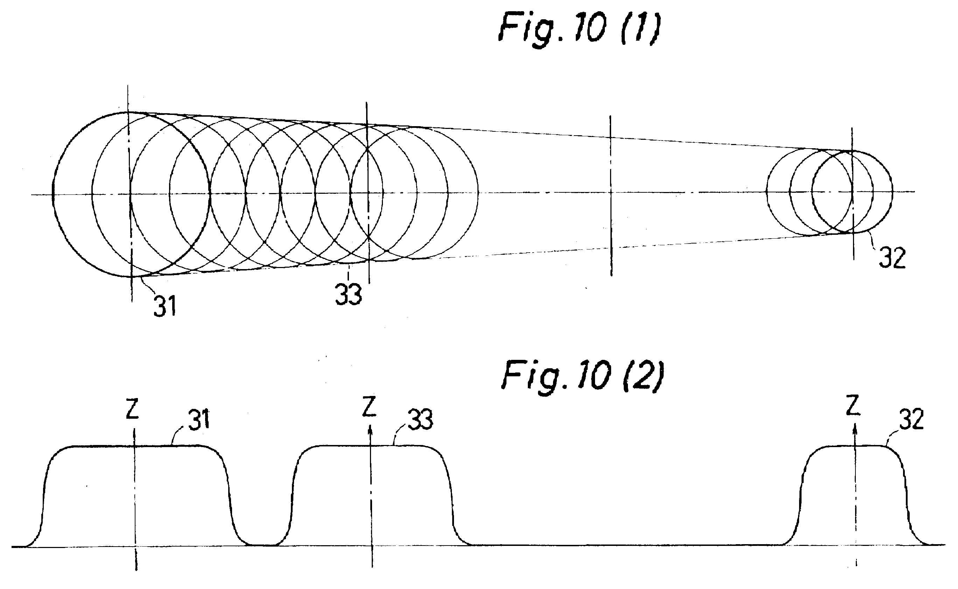

Fig. 10 (1) is a graph showing the state of interpolation processing along the movement of the pen 1. The painting front-end processor 3 interpolates between the first circle painting unit 31 and second circle painting unit 32, and sets the intermediate circle painting unit 33. Fig. 10 (2) shows the contribution degree value Z corresponding to the circle painting units 31, 32, 33. Thus, smooth painting is realized.

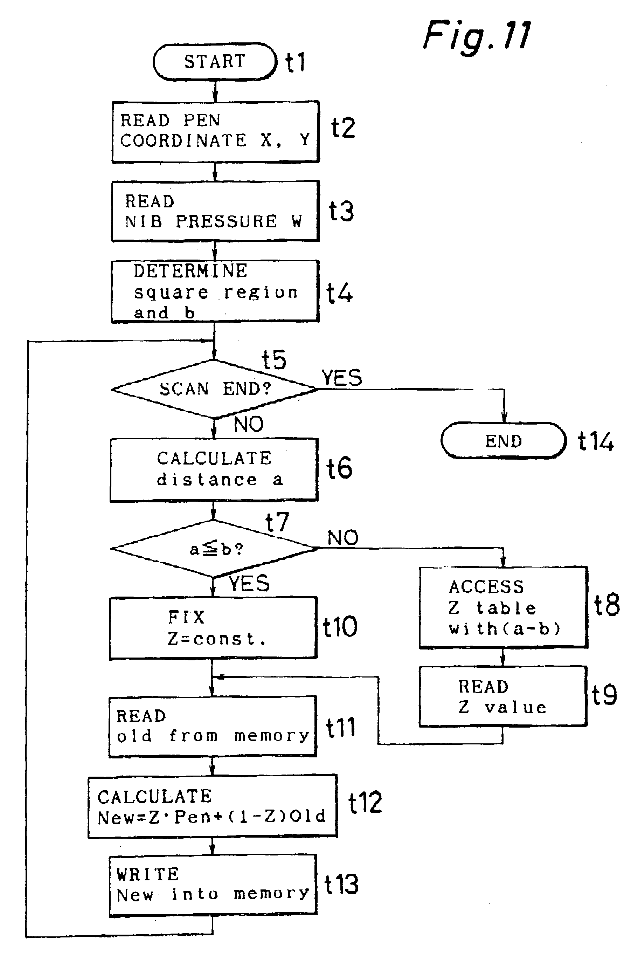

Fig.11 is a flow chart showing the above-mentioned painting operation. Starting from step t1, the coordinate X, Y designated by the stylus pen 1 and the nib pressure are read respectively at step t2 and t3. A square region, which include the circle painting unit corresponding to the coordinate X, Y, the radius b and the nib pressure, is determined at step t4.

At step t5, a scanning operation starts within the square region. A distance a from the center X, Y to one of scanned address Pn is calculated at step t6. This value a is compared to the value b at step t7.

In case a is greater than b, Z value is obtained from Z table addressed with the value (a-b) at step t8 and t9. In case a is less or equal to b, Z value is fixed to a predetermined constant value at step t10.

At step t11, an old data corresponding to the previous pixel intensity is read from the frame memory 6 addressed by the data Pn. In old data and the Pen data representing characters and colors imparted to the pen 1 are combined to calculate a new data at step t12. The new data is written into the frame memory 6 at the address Pn at step t13.

Until the scanning within the square area is terminated at step t5, steps t5 to t13 from a loop. This scanning process is terminated at step t14.

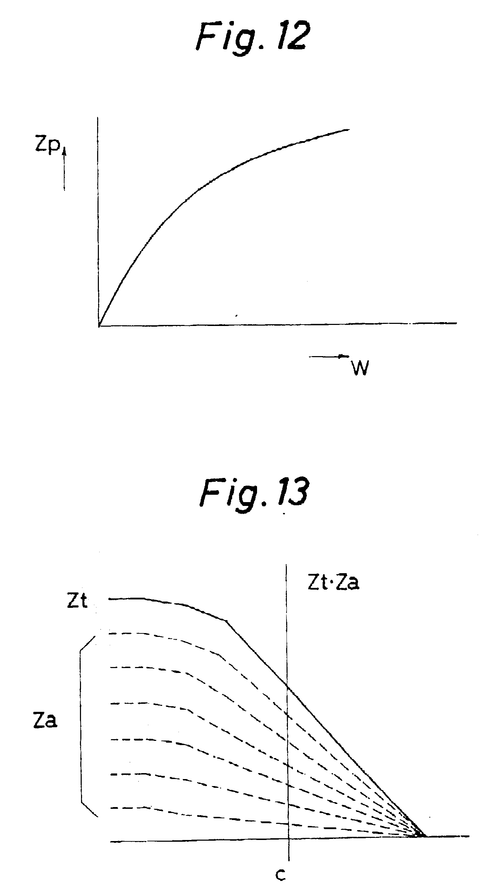

Fig. 12 is a graph showing a distribution value Zp varies according to a nib pressure W.

Fig. 13 is a graph showing a distribution value Zt and Za vary according to a distance.

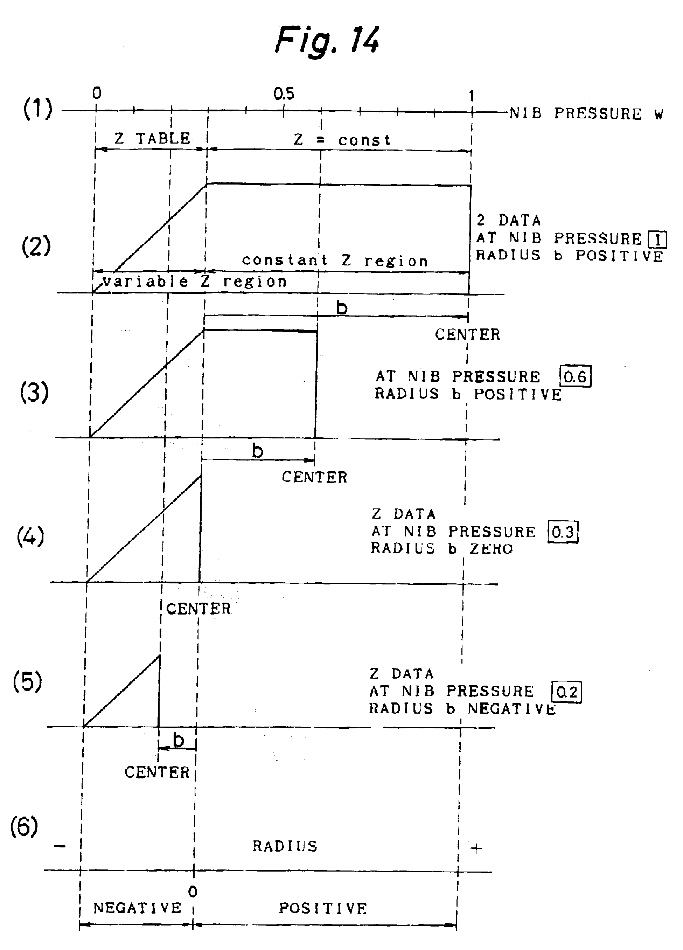

Figs. 14 (1) through 14 (6) show a relationship between the nib pressure W and Z table.

Fig. 14 (1) shows a range of the nib pressure W normalized from 0 to 1. Fig. 14 (2) shows a diagram representing Z distribution when W equals 1. Fig. 14 (3) through Fig. 14 (5) correspond to the W values 0.6, 0.3 and 0.2 respectively. In case the nib pressure W is less than 0.3, the Z table is referred by radius b supposed negative as shown in Fig. 14 (6). That is, Z values corresponding to various W values are able to be obtained from only one Z table.

The invention may be embodied in other specific forms without departing from the scope thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. An apparatus for editing and creating video image composed of an input device (1) such as digitizer, an operation processor provided with painting data memory (8) and frame memory (6), and display device (9), characterized in that the operation processor further comprises:

   a main processor (2) for controlling the operation of the apparatus;

   a painting front-end processor (3) for calculating interpolation values by processing pen coordinate values and nib pressure value from the input device (1) when executing a command relating to pen painting, and delivering calculated values composed of the center coordinate values of a circle painting unit and radius of circle;

   a painting address operation processor (4) for supplying addresses to the frame memory (6) corresponding to a scanned zone including the circle painting unit, in accordance with the coordinate values from the input device (1); and

   a Z-operation processor (5) for calculating the distance a from an address integer value Pn calculated by the painting address operation processor (4) to the center value of the circle painting unit and difference c between this distance a and painting radius b, and delivering calculated value Z corresponding to the painting radius or the nib diameter by referring to a table from the calculated value c;

   and an anti-aliasing processor (7) for receiving the calculated value Z from the Z-operation processor (5), mixing original painting data from the frame memory (6) and painting data from the painting data memory (8) on the basis of the calculated value Z, and feeding said mixed data to the frame memory (6).

2. An apparatus for editing and creating video image according to claim 1, wherein the calculated value Z corresponding to the difference c is varied by changing the content of the table to refer to in the Z-operation processor (5).

3. An apparatus for editing and creating video image according to claim 1, wherein the processing range of the anti-aliasing processing is varied by changing the range of the value c of the table to be referred to in the Z-operation processor (5).

4. A method for editing and creating video image using soft edge process, by means of an apparatus for editing and creating video image comprising an input device (1), an operation processor (1) for video image data and a display device (9), to paint an image on a digitizer and displaying the image on the display device (9), characterized in that the process includes the steps of:

processing operation for the video image data and the display device (9), in which pen coordinate values and pen nib pressure values entered from the digitizer are arithmetically processed to calculate individual interpolation values;

calculating a radius b proportional to the pen nib pressure from the interpolation values;

calculating the distance a from an image point to the pen coordinate;

calculating the difference c between the distance a and the radius b;

calculating a value Z corresponding to the difference c by referring to a table; and

executing the anti-aliasing processing proportional to the calculated value Z for the image point by mixing data from frame memory (6) and painting data memory (8), thereby making it possible to paint the video image of high quality in real time.

5. An apparatus for editing and creating video image comprising:

painting means (1) for designating positions X, Y to paint an image and for indicating a nib pressure W;

preprocessing means (3) in response to the output from the painting means (1), for determining a circle painting unit possessing a radius b corresponding to the nib pressure W, and leading out the signals representing the circle painting unit as center coordinates X, Y and the radius b;

display means (9) for displaying an image comprised of plural pixels;

a frame memory (6) possessing a plurality of memory elements, specified in address corresponding to the pixels of the display means, and storing the display content for the display means (9),

coordinates address generating means (4) in response to the signal from the preprocessing means (3), for leading out signals representing coordinates in a region involving the circle painting unit, and also signals representing the address Pn of the frame memory (6) corresponding to the coordinates in the region;

Z-operation means (5) responsive to the signals from the preprocessing means (3) and coordinate address generating means (4), for calculating a contribution degree Z, which possesses a certain predetermined value when the address Pn is inside of the boundary of the radius b of the circle painting unit, and decreases through a predetermined range rate when the address Pn is outside in the radial direction from the boundary of the radius b of the circle painting unit, and leading out the signal for representing the value Z as a result of the calculation;

painting information generating means (8) responsive to the operation of the painting means for generating a signal representing the painting information to be added to the image displayed on the display means (9); and

anti-aliasing means (7) responsive to the signals of every pixel specified in address by the address Pn from the coordinate address generating means (4) for adding the painting information at the contribution degree Z in each pixel to the display content being read out from the memory element of the frame memory (6), and storing the signals representing the result of the calculation in the memory element corresponding to the address Pn of the frame memory (6).

6. An apparatus for editing and creating video image according to claim 5, wherein the Z-operation means (5) possesses a table Tc for storing the predetermined values of contribution degree Z corresponding to the distance from the boundary, and calculates the distance a from the address Pn to the center X, Y of the circle painting unit, and the difference c between the distance a and the radius b of the circle painting unit, and determines the contribution degree Z by referring to the table Tc by the value of the difference c.

7. An apparatus for editing and creating video image according to claim 5 or 6, wherein the preprocessing means (3) interpolates the output from the painting means (1), sets the intermediate circle painting unit at an interval proportional to the radius b of the circle painting unit, and leads out the signals representing the center coordinates Xi, Yi, radius bi, and nib pressure Wi.

8. An apparatus for editing and creating video image according to claim 5, 6 or 7, wherein the coordinate address generating means (4) leads out the signals representing the coordinates in the square region involving the circle with the radius b, centered around the center coordinates X, Y of the circle painting unit, and the signals representing the address Pn of the frame memory (6) corresponding to the coordinates of the pixel.

**Patentansprüche**

1. Vorrichtung zum Bearbeiten und Erzeugen von Videobildern, die aufgebaut ist aus einer Eingabeeinrichtung (1) wie etwa einer Digitalisiereinrichtung, einem Operationsprozessor, der einen Kolorierungsdatenspeicher (8) und einen Rahmenspeicher (6) enthält, und einer Anzeigeeinrichtung (9), dadurch gekennzeichnet, daß der Operationsprozessor ferner enthält:

einen Hauptprozessor (2), der die Operation der Vorrichtung steuert;

einen Kolorierungs-Vorrechner (3), der durch Verarbeiten von Zeichenstift-Koordinatenwerten und Stiftspitzen-Druckwerten von der Eingabeeinrichtung (1) Interpolationswerte berechnet, wenn er einen auf die Zeichenstiftkolorierung bezogenen Befehl abarbeitet, und berechnete Werte ausgibt, die aus den Mittelpunktkoordinatenwerten einer Kreiskolorierungseinheit und dem Radius des Kreises zusammengesetzt sind;

einen Kolorierungsadressen-Operationsprozessor (4), der in Übereinstimmung mit den Koordinatenwerten von der Eingabeeinrichtung (1) an den Rahmenspeicher (6) Adressen liefert, die einer die Kreiskolorierungseinheit enthaltenden abgetasteten Zone entsprechen; und

einen Z-Operationsprozessor (5), der den Abstand a von einem durch den Kolorierungsadressen-Operationsprozessor (4) berechneten ganzzahligen Adressenwert Pn zum Mittelpunktwert der Kreiskolorierungseinheit sowie die Differenz c zwischen diesem Abstand a und einem Kolorierungsradius b berechnet und unter Bezugnahme auf eine Tabelle mittels des berechneten Wertes c einen berechneten Wert Z liefert, der dem Kolorierungsradius oder dem Stiftspitzen-Durchmesser entspricht;

und einen Antialiasing-Prozessor (7), der den berechneten Z-Wert vom Z-Operationsprozessor (5) empfängt, die ursprünglichen Kolorierungsdaten vom Rahmenspeicher (6) mit den Kolorierungsdaten vom Kolorierungs-Datenspeicher (8) auf der Grundlage des berechneten Z-Wertes mischt und die gemischten Daten in den Rahmenspeicher (6) befördert.

2.	Vorrichtung zum Bearbeiten und Erzeugen von Videobildern nach Anspruch 1, bei der der berechnete Wert Z, der der Differenz c entspricht, durch Ändern des Inhalts der Tabelle, auf die im Z-Operationsprozessor (5) Bezug genommen wird, verändert wird.

3.	Vorrichtung zum Bearbeiten und Erzeugen von Videobildern nach Anspruch 1, bei der der Verarbeitungsbereich der Antialiasing-Verarbeitung durch Ändern des Bereichs des Wertes c der Tabelle, auf die im Z-Operationsprozessor (50) Bezug genommen wird, verändert wird.

4.	Verfahren zum Bearbeiten und Erzeugen von Videobildern unter Verwendung eines Randunschärfeprozesses mittels einer Vorrichtung zur Bearbeitung und Erzeugung von Videobildern, die eine Eingabeeinrichtung (1), einen Operationsprozessor (1) für Videobilddaten und eine Anzeigeeinrichtung (9) enthält, um auf einer Digitalisiereinrichtung ein Bild zu kolorieren und das Bild auf der Anzeigeeinrichtung (9) anzuzeigen, dadurch gekennzeichnet, daß der Prozeß die folgenden Schritte enthält:

Abarbeiten der Operation für die Videobilddaten und die Anzeigeeinrichtung (9), wobei Zeichenstift-Koordinatenwerte und Stiftspitzen-Druckwerte, die von der Digitalisiereinrichtung eingegeben werden, arithmetisch verarbeitet werden, um einzelne Interpolationswerte zu berechnen;

Berechnen eines Radius b, der zum Stiftspitzen-Druck proportional ist, aus den Interpolationswerten;

Berechnen des Abstands a von einem Bildpunkt zur Zeichenstiftkoordinate;

Berechnen der Differenz c zwischen dem Abstand a und dem Radius b;

Berechnen eines Z-Wertes, der der Differenz c entspricht, durch Bezugnahme auf eine Tabelle; und

Abarbeiten der Antialiasing-Verarbeitung, die zum berechneten Z-Wert für den Bildpunkt proportional ist, indem Daten vom Rahmenspeicher (6) und vom Kolorierungsdatenspeicher (8) gemischt werden, wodurch ermöglicht wird, das Videobild mit hoher Qualität in Echtzeit zu malen.

5.	Vorrichtung zum Bearbeiten und Erzeugen von Videobildern, mit:

einer Kolorierungseinrichtung (1), die Positionen X, Y bezeichnet, um ein Bild zu kolorieren, und einen Stiftspitzen-Druck W angibt;

einer Vorverarbeitungseinrichtung (3), die auf den Ausgang von der Kolorierungseinrichtung (1) anspricht und eine Kreiskolorierungseinheit festlegt, die einen Radius b besitzt, der dem Stiftspitzen-Druck W entspricht, und die Signale herausführt, die die Kreiskolorierungseinheit in Form der Mittelpunktkoordinaten X, Y und des Radius b repräsentieren;

einer Anzeigeeinrichtung (9), die ein mehrere Pixel enthaltendes Bild anzeigt;

einem Rahmenspeicher (6), der mehrere Speicherelemente besitzt, deren Adressen in Übereinstimmung mit den Pixeln der Anzeigeeinrichtung spezifiziert sind, und den Anzeigeinhalt für die Anzeigeeinrichtung (9) speichert,

einer Koordinatenadressen-Erzeugungseinrichtung (4), die auf das Signal von der Vorverarbeitungseinrichtung (3) anspricht und Signale, die Koordinaten in einem die Kreiskolorierungseinheit enthaltenden Bereich repräsentieren, sowie außerdem Signale herausführt, die die Adresse Pn des Rahmenspeichers (6), die den Koordinaten im Bereich entspricht, repräsentieren;

einer Z-Operationseinrichtung (5), die auf die Signale von der Vorverarbeitungseinrichtung (3) und der Koordinatenadressen-Erzeugungseinrichtung (4) anspricht, einen Beitragsgrad Z berechnet, der einen bestimmten vorgegebenen Wert besitzt, wenn sich die Adresse Pn innerhalb der Grenze des Radius b der Kreiskolorierungseinheit befindet, und über eine vorgegebene Reichweite abnimmt, wenn sich die Adresse Pn in radialer Richtung außerhalb der Grenze des Radius b der Kreiskolorierungseinheit befindet, und als Ergebnis der Berechnung das Signal herausführt, das den Z-Wert repräsentiert;

einer Kolorierungsinformation-Erzeugungseinrichtung (8), die auf die Operation der Kolorierungseinrichtung anspricht und ein Signal erzeugt, das die Kolorierungsinformation repräsentiert, die zu dem auf der Anzeigeeinrichtung (9) angezeigten Bild hinzuzufügen ist; und

einer Antialiasing-Einrichtung (7), die auf die Signale jedes Pixels anspricht, das hinsichtlich seiner Adresse durch die Adresse Pn von der Koordinatenadressen-Erzeugungseinrichtung (4) spezifiziert ist, die Kolorierungsinformation mit dem Beitragsgrad Z in jedem Pixel zum Anzeigeinhalt hinzufügt, der aus dem Speicherelement des Rahmenspeichers (6) gelesen wird, und die Signale speichert, die das Ergebnis der Berechnung in dem der Adresse Pn des Rahmenspeichers (6) entsprechenden Speicherelement repräsentieren.

6. Vorrichtung zum Bearbeiten und Erzeugen von Videobildern nach Anspruch 5, bei der die Z-Operationseinrichtung (5) eine Tabelle Tc besitzt, in der die vorgegebenen Werte des Beitragsgrades Z, die dem Abstand von der Grenze entsprechen, gespeichert sind, und die den Abstand a von der Adresse Pn zum Mittelpunkt X, Y der Kreiskolorierungseinheit sowie die Differenz c zwischen dem Abstand a und dem Radius b der Kreiskolorierungseinheit berechnet und den Beitragsgrad Z bestimmt, indem sie mit dem Wert der Differenz c auf die Tabelle Tc Bezug nimmt.

7. Vorrichtung zum Bearbeiten und Erzeugen von Videobildern nach Anspruch 5 oder 6, bei der die Verarbeitungseinrichtung (3) den Ausgang der Kolorierungseinrichtung (1) interpoliert, die Zwischen-Kreiskolorierungseinheit in einem Intervall setzt, das zum Radius b der Kreiskolorierungseinheit proportional ist, und die Signale, die die Mittelpunktkoordinaten Xi, Yi, den Radius bi und den Stiftspitzen-Druck Wi repräsentieren, herausführt.

8. Vorrichtung zum Bearbeiten und Erzeugen von Videobildern nach Anspruch 5, 6 oder 7, bei der die Koordinatenadressen-Erzeugungseinrichtung (4) die Signale, die die Koordinaten in dem quadratischen Bereich repräsentieren, der den Kreis mit Radius b enthält, der um die Mittelpunktkoordinaten X, Y der Kreiskolorierungseinheit zentriert ist, sowie die Signale herausführt, die die Adresse Pn des Rahmenspeichers (6) repräsentieren, die den Koordinaten des Pixels entspricht.

**Revendications**

1. Appareil d'édition et de création d'images vidéo composé d'un dispositif d'entrée (1) tel qu'un convertisseur en numérique, d'un processeur d'exploitation muni d'une mémoire de données de peinture (8) et d'une mémoire de cadre (6), et d'un dispositif d'affichage (9), caractérisé en ce que le processeur d'exploitation comprend en outre :

un processeur principal (2) qui contrôle le fonctionnement de l'appareil ;

un processeur frontal de peinture (3) qui calcule des valeurs d'interpolation en traitant des valeurs de coordonnées de plume et une valeur de pression de plume provenant du dispositif d'entrée (1) lors de l'exécution d'une commande relative à une peinture à la plume et qui fournit des valeurs calculées composées des coordonnées du centre d'une unité de peinture d'un cercle et du rayon de ce cercle :

un processeur de traitement d'adresse de peinture (4) qui envoie à la mémoire de trame (6) des adresses correspondant à une zone balayée incluant l'unité de peinture d'un cercle, en fonction des valeurs de coordonnées provenant du dispositif d'entrée (1) ; et

un processeur de traitement de Z (5) qui calcule la distance $\underline{a}$ entre une valeur entière d'adresse Pn calculée par le processeur de traitement d'adresse de peinture (4) et la valeur centrale de l'unité de peinture d'un cercle, et la différence $\underline{c}$ entre cette distance $\underline{a}$ et le rayon de peinture $\underline{b}$, et transmet une valeur calculée Z correspondant au rayon de peinture ou au diamètre de bec de plume en se référant à une table à partir de la valeur calculée $\underline{c}$ ; et

un processeur anti-erreur d'échantillonnage (7) qui reçoit la valeur calculée Z du processeur de traitement de Z (5), mélange des données de peinture originales de la mémoire de trame (6) et des données de peinture (8) d'après la valeur calculée Z, et transmet lesdites données mélangées à la mémoire de trame (6).

2. Appareil d'édition et de création d'images vidéo selon la revendication 1, dans lequel on fait varier la valeur calculée Z correspondant à la différence $\underline{c}$ en changeant le contenu de la table de référence du processeur de traitement de Z(5).

3. Appareil d'édition et de création d'images vidéo selon la revendication 1, dans lequel on fait varier le domaine d'application du traitement anti-erreur d'échantillonnage en changeant le domaine de la valeur $\underline{c}$ de la table de référence du processeur de traitement de Z (5).

4. Procédé d'édition et de création d'images vidéo utilisant un procédé de traitement logiciel frontal au moyen d'un appareil d'édition et de création d'images vidéo comprenant un dispositif d'entrée (1), un processeur d'exploitation (1) des données d'images vidéo et un dispositif d'affichage (9), permettant de peindre une image sur un convertisseur en numérique et de visualiser l'image sur le dispositif d'affichage (9), caractérisé en ce que le procédé comprend les étapes de :

   traitement des données d'image vidéo et du dispositif d'affichage (9) dans lequel les valeurs de coordonnées de la plume et les valeurs de pression de plume provenant du convertisseur en numérique sont traitées arithmétiquement afin de calculer des valeurs d'interpolation individuelles ;

   calcul d'un rayon $\underline{b}$ proportionnel à la pression de plume à partir des valeurs d'interpolation ;

   calcul de la distance $\underline{a}$ entre un point d'image et les coordonnées de la plume ;

   calcul de la différence $\underline{c}$ entre la distance $\underline{a}$ et le rayon $\underline{b}$ ;

   calcul d'une valeur Z correspondant à la différence $\underline{c}$ par référence à une table ; et

   exécution du traitement anti-erreur d'échantillonnage proportionnel à la valeur Z calculée pour le point d'image, en mélangeant des données de la mémoire de trame (6) et de la mémoire de données de peinture (8), rendant ainsi possible le fait de peindre une image vidéo de grande qualité en temps réel.

5. Appareil d'édition et de création d'images vidéo comprenant :

   un moyen de peinture (1) permettant de désigner des positions X, Y pour peindre une image et d'indiquer une pression de plume W ;

   un moyen de prétraitement (3) répondant à la sortie du moyen de peinture (1), qui détermine une unité de peinture d'un cercle possédant un rayon $\underline{b}$ correspondant à la pression de plume W, et délivre en sortie les signaux représentant l'unité de peinture d'un cercle par les coordonnées de son centre X, Y et son rayon $\underline{b}$ ;

   un moyen d'affichage (9) permettant de visualiser une image composée de plusieurs pixels ;

   une mémoire de trame (6) possédant plusieurs éléments de mémoire, désignés par des adresses correspondant aux pixels du moyen d'affichage, et stockant le contenu de l'affichage pour le moyen d'affichage (9) ;

   un moyen générateur d'adresse de coordonnées (4) répondant au signal provenant du moyen de prétraitement (3), qui délivre en sortie des signaux représentant des coordonnées dans une région comprenant l'unité de peinture d'un cercle, ainsi que des signaux représentant l'adresse Pn de la mémoire de trame (6) qui correspond aux coordonnées de la région ;

   un moyen de traitement Z (5) répondant aux signaux provenant du moyen de prétraitement (3) et du moyen générateur d'adresse de coordonnées (4), qui calcule un degré de contribution Z, qui possède une certaine valeur prédéterminée lorsque l'adresse Pn est à l'intérieur de la frontière du rayon $\underline{b}$ de l'unité de peinture d'un cercle et diminue d'un taux prédéterminé lorsque l'adresse Pn est radialement à l'extérieur de la frontière de rayon $\underline{b}$ de l'unité de peinture d'un cercle, et délivre en sortie le signal représentant la valeur Z résultant du calcul ;

   un moyen générateur d'informations de peinture (8) répondant à l'opération du moyen de peinture pour générer un signal représentant les informations de peinture devant être ajoutées à l'image visualisée sur le moyen d'affichage (9) ; et

   un moyen anti-erreur d'échantillonnage (7) répondant aux signaux de tous les pixels désignés en adresse par l'adresse Pn provenant du moyen générateur d'adresse de coordonnées (4), qui ajoute les informations de peinture au degré de contribution Z, à chaque pixel au contenu de l'affichage extrait de l'élément de mémoire de la mémoire de trame (6), et stocke les signaux représentant le résultat du calcul dans l'élément de mémoire correspondant à l'adresse Pn de la mémoire de trame (6).

6. Appareil d'édition et de création d'images vidéo selon la revendication 5, dans lequel le moyen de traitement de Z (5) possède une table Tc qui contient les valeurs prédéterminées du degré de contribution Z en fonction de la distance à la frontière, et calcule la distance $\underline{a}$ entre l'adresse Pn et le centre X, Y de l'unité de peinture d'un cercle et la différence $\underline{c}$ entre la distance $\underline{a}$ et le rayon $\underline{b}$ de l'unité de peinture d'un cercle, et détermine le degré de contribution Z par référence à la table Tc à partir de la valeur de la différence $\underline{c}$.

7. Appareil d'édition et de création d'images vidéo selon la revendication 5 ou 6, dans lequel le moyen de prétraitement (3) interpole la sortie du moyen de peinture (1), positionne l'unité de peinture d'un cercle intermédiaire à une distance proportionnelle au rayon b de l'unité de peinture d'un cercle, et délivre en sortie les signaux représentant les coordonnées du centre Xi, Yi, le rayon bi et la pression de plume Wi.

8. Appareil d'édition et de création d'images vidéo selon la revendication 5, 6 ou 7, dans lequel le moyen générateur d'adresse de coordonnées (4) délivre en sortie les signaux représentant les coordonnées dans la région carrée comprenant le cercle de rayon b, centré sur les coordonnées X, Y du centre de l'unité de peinture d'un cercle, et les signaux représentant l'adresse Pn de la mémoire de trame (6) correspondant aux coordonnées du pixel.

# Fig. 1

# Fig. 2

$X_0 \ Y_0 \ W_0$     $X_i \ Y_i \ W_i$     $X_1 \ Y_1 \ W_1$

# Fig. 3

$P_n$     ADDRESS INTEGER
DATA

CIRCLE PAINTING

# Fig. 4

⊘ COORDINATE POSITIONS
CORRESPONDING TO PIXEL

○ COORDINATE POSITIONS AT
RESOLUTION OF 0.25

Fig.5(a)

Z

Z-VALUE
REFERENCE
TABLE

b                 a                 R

Fig.5(b)

PAINTING
DATA

ORIGINAL
IMAGE DATA

PAINTING RANGE

Fig.5(c)

ANTI-ALIASING
PROCESSING RANGE

# Fig. 6

PEN NIB PRESSURE

PEN NIB PRESSURE ←

CIRCLE PAINTING

Z-VALUE
DISTRIBUTION

Z-VALUE DISTRIBUTION

16

# Fig. 7

```
┌─────────────────────┐ ~3        ┌─────────────────────┐ ~4
│   PAINTING FRONT    │           │  PAINTING ADDRESS   │
│  -END PROCESSOR     │           │  OPERATION PROCESS  │
└─────────────────────┘           └─────────────────────┘
          │ ~11                              │ ~15
```

┌─────────────┐   ┌─────────┐   ┌─────────────┐ ~14
│ NIB         │   │ RADIUS  │   │ CENTER      │
│ PRESSURE    │   │   b     │   │ COORDINATES │        Pn
│   W         │   │         │   │   X, Y      │
└─────────────┘   └─────────┘   └─────────────┘
      12              13

┌─────────────────────┐ ~5a
│  a-CALCULATION      │
│   OPERATION         │
└─────────────────────┘
            │ a

┌───────────────────────────────┐ ~5b
│          c = a - b            │
└───────────────────────────────┘

            W │                    │ C

┌─────────┐ Tz              ┌─────────┐ Tc
│ TABLE   │                 │ TABLE   │
└─────────┘                 └─────────┘
     │ Zp                        │ Zt

┌───────────────────────────────┐ ~5c
│        Za = Zp × Zt           │
└───────────────────────────────┘

    │ Z̄a                      │ Za

                              Z-OPERATION
                              PROCESSOR
                                        ~5

┌───────────────────────────────┐
│      ANTI-ALIASING            │ ~7
│      PROCESSOR                │
└───────────────────────────────┘

# Fig. 8

START s1

s2 DURING COMMAND EXECUTION ABOUT PEN PAINTING? — YES

NO

s3 PROCESSING BY PAINTING FRONT-END PROCESSOR 3 Pen COORDINATES X, Y, PEN NIB PRESSURE Z

s6 Pen COORDINATES X, Y PROCESSING

s4 Pen SPEED HIGH? — YES

NO

s5 INTERPOLATION PROCESSING

s7 DISPLAY PROCESSING

s8 INPUT PROCESSING

s9 END? — YES

NO

s10 COMMAND PROCESSING

s11 END

*Fig.9 (1)*

*Fig.9 (2)*

Fig.10 (1)

Fig.10 (2)

*Fig.11*

```
        ( START )  t1
            │
            ▼
    ┌─────────────────┐
    │ READ PEN        │  t2
    │ COORDINATE X, Y │
    └─────────────────┘
            │
            ▼
    ┌─────────────────┐
    │ READ            │  t3
    │ NIB PRESSURE W  │
    └─────────────────┘
            │
            ▼
    ┌─────────────────┐
    │ DETERMINE       │  t4
    │ square region   │
    │ and b           │
    └─────────────────┘
            │
  ┌─────────┤
  │         ▼
  │        ╱ ╲  t5
  │       ╱SCAN╲────YES──────────────┐
  │       ╲END?╱                     ▼
  │        ╲ ╱                  ( END )  t14
  │         │NO
  │         ▼
  │   ┌─────────────┐
  │   │ CALCULATE   │  t6
  │   │ distance a  │
  │   └─────────────┘
  │         │
  │         ▼
  │        ╱ ╲  t7
  │       ╱   ╲───NO────────┐
  │       ╲a≦b?╱            ▼
  │        ╲ ╱        ┌──────────────┐
  │         │YES      │ ACCESS       │  t8
  │         ▼         │ Z table      │
  │   ┌──────────┐    │ with(a-b)    │
  │   │ FIX      │t10 └──────────────┘
  │   │ Z=const. │            │
  │   └──────────┘            ▼
  │         │           ┌──────────┐
  │         │◄──────┐   │ READ     │  t9
  │         ▼       │   │ Z value  │
  │   ┌──────────────┐  └──────────┘
  │   │ READ         │t11      │
  │   │ old from memory│◄──────┘
  │   └──────────────┘
  │         │
  │         ▼
  │   ┌────────────────────────┐
  │   │ CALCULATE              │ t12
  │   │ New=Z·Pen+(1-Z)Old     │
  │   └────────────────────────┘
  │         │
  │         ▼
  │   ┌──────────────────┐
  │   │ WRITE            │ t13
  │   │ New into memory  │
  │   └──────────────────┘
  │         │
  └─────────┘
```

21

*Fig. 12*

*Fig. 13*

# Fig. 14